# EUROPÄISCHE PATENTSCHRIFT

(11) **EP 0 659 957 B1**
(45) Veröffentlichungstag und Bekanntmachung des Hinweises auf die Patenterteilung: **06.08.1997**
(21) Anmeldenummer: 94115918.8
(22) Anmeldetag: 08.10.1994
(51) Int. Cl.: E04H 6/00, B62H 3/00, A47C 7/62, A47C 13/00, A47C 11/00

(54) **Kastenförmige Abstellbox**
Box like garage unit
Garage en forme de boîte

(30) Priorität: 21.12.1993 DE 9319663 U
(43) Veröffentlichungstag der Anmeldung: 28.06.1995
(73) Patentinhaber: Odenwaldwerke Rittersbach GmbH, 74834 Elztal-Rittersbach (DE)
(72) Erfinder: Ostheimer, Tibor, D-74821 Mosbach (DE)
(74) Vertreter: Fischer, Wolf-Dieter, Dipl.-Ing.

(56) Entgegenhaltungen:
- DE-A- 3 215 296
- GB-A- 2 143 263
- US-A- 5 098 155
- US-A- 5 222 782

## Beschreibung

Die Erfindung betrifft eine kastenförmige Abstellbox mit zwei Seitenwänden, einer Rückwand, einem Deckenteil und gegebenenfalls mit einer Fußbodenplatte und mit einer die Abstellbox verschließenden Tür.

Eine derartige Abstellbox ist bekannt (DE-A-32 15 296), die insbesondere als Abstellbox für Zweiräder, wie Mofas oder Fahrräder benutzt wird. Hierbei ist die Tür als Schwenktür ausgebildet, die mit einem sich in der Ebene der Decke erstreckenden Vorsprung versehen ist, der bei geschlossener Tür in eine entsprechende Aussparung der Decke eingreift. Die Form dieser Abstellbox ist derart, daß diese eine gleichförmige Höhe aufweist und von der Tür ausgehend schmäler wird. Diese bekannten Abstellboxen können aneinandergesetzt den vorhandenen Hindernissen und Platzgegebenheiten angepaßt werden. Der wesentliche Nachteil dieser bekannten Abstellbox besteht jedoch darin, daß diese nur eine reine Abstellfunktion aufweist, d.h. der von den zusammengesetzten Abstellboxen ausgefüllte Platz ist für andere Funktionen nicht einsetzbar. Ein weiterer Nachteil ist darin zu sehen, daß zum Öffnen der Tür verhältnismäßig viel Platz gebraucht wird, da die Tür als Schwingtür an Scharnieren einer Seitenwandung angebracht ist. Daraus resultiert auch eine erhöhte Unfallgefahr, insbesondere wenn bei einer solchen Abstellbox unbenutzt die Tür geöffnet bleibt. Weiterhin ist es nachteilig, daß durch die Aussparung im Deckenteil die Türabdichtung umständlich ist.

Der Erfindung liegt die Aufgabe zugrunde, eine derartige Abstellbox so auszubilden, daß eine Doppelfunktion gegeben ist, d.h. daß neben der Abstellfunktion die Box auch als in jedes Landschaftsbild und Bauwerk zu integrierende Sitzbank bzw. Sitzbankgruppe verwendbar ist.

Diese Aufgabe wird nach der Erfindung dadurch gelöst, daß wenigstens eine Seite des Deckenteils als Sitzteil und Rückenlehne ausgebildet ist und das Sitzteil mit der Rükkenlehne und dem Türteil scharnierartig verbunden an einem Scharnier an dem Deckenteil angelenkt ist.

Eine vorteilhafte Ausführungsform besteht darin, daß die Seitenwände mit der Rückwand und dem Türteil ein zur Rückwand schmäler werdendes Trapez bilden.

Es ist vorteilhaft, daß die Abstellbox nach dem Baukastenprinzip aus einzelnen miteinander verschraubten Einzelteilen besteht.

Es ist außerdem vorteilhaft, daß die Abstellbox aus aneinandergereihten Halbschalen besteht, wobei die eine Seitenwandung von der benachbarten Halbschale gebildet wird.

Es ist weiterhin vorteilhaft, daß zu beiden Seiten des Deckenteils ein Sitzteil mit Rückenlehne und Türteil vorgesehen ist.

Es ist vorteilhaft, daß die Fußbodenplatte mit einer in Längsrichtung der Box verlaufenden Führung versehen ist.

Weiterhin wird vorgeschlagen, daß an der aus dem Sitzteil und der Rückenlehne bestehenden Einheit ein Hebelarm befestigt ist, an dessen Endpunkt ein Zugseil mit Gegengewicht angreift.

Eine vorteilhafte Ausführungsform sieht vor, daß an dem Hebelarm eine seitlich an der Abstellbox abgestützte Gasfeder angreift.

Vorteilhaft geht man so vor, daß das Sitzteil gegen die Seitenwand mittels eines Springaufbeschlages gehalten ist.

Es ist weiterhin vorteilhaft, daß die Fußbodenplatte an Fundamenten, im Boden versenkt, befestigt ist.

Vorteilhaft sind einzelne Boxen zu Gruppen miteinander verbunden.

Schließlich wird vorgeschlagen, daß an den zu Gruppen zusammengesetzten Boxen Überdachungen, Werbeträger, eine Werbesäule, Beleuchtungskörper, Telefoneinheiten und dergleichen angebracht sind.

Die Erfindung bringt insbesondere den Vorteil, daß nach einer Art Baukastensystem solche Sitzbankgruppen Zusammengestellt werden können, die gleichzeitig als diebstahlsichere Abstellboxen für Zweiräder oder gegebenenfalls auch Gepäckstücke verwendbar sind. Es ergibt sich hierbei eine optimale Platz und Raumausnutzung und die einzelnen Gruppen lassen sich von ihrer ästhetischen Form her in jedes Stadt- bzw. Landschaftsbild einbauen. Durch die besondere Art der Öffnungsmöglichkeit der Box wird jede Unfallgefahr ausgeschlossen, wobei kein zusätzlicher Platz beim Öffnen der Tür gebraucht wird.

Die Erfindung wird in der nachfolgenden Beschreibung anhand von in den Zeichnungen dargestellten Ausführungsbeispielen näher erläutert.

Es zeigen,
- Fig. 1: eine schaubildliche Ansicht einer ersten Ausführungsform einer derartigen kastenförmigen Abstellbox,
- Fig. 2: eine Seitenansicht der Box mit der Öffnungsmechanik,
- Fig. 3: eine schaubildliche Ansicht mit geöffneter Zugangsöffnung,
- Fig. 4: eine schaubildliche Ansicht der Box beim Einschieben eines Fahrrades,
- Fig. 5: eine Seitenansicht der Box mit der Öffnungsmechanik gemäß einer weiteren Ausführungsform,
- Fig. 6: die Ansicht "X" gemäß Fig. 1 in vergrößerter Darstellung,
- Fig. 7: die Einzelteile der Abstellbox vor dem Zusammenfügen,
- Fig. 8: eine schaubildliche Ansicht von einzelnen aneinandergereihten und aus Halbschalen bestehenden Boxen,
- Fig. 9: einen Schnitt nach der Linie A-A in Fig. 8,
- Fig. 10: einen Schnitt durch die Box mit einem in der Box angeordneten Fahrrad und Bodenmontage,
- Fig. 11: eine Gruppe von zusammengesetzten Abstellboxen gemäß einer ersten Ausführungsform von Boxen,
- Fig. 12: eine Gruppe derartiger Abstellboxen gemäß einer weiteren Ausführungsform dieser Boxen,
- Fig. 13: eine kreisringförmige Anordnung solcher Boxen,
- Fig. 14: eine S-förmige Anordnung der Abstellboxen,
- Fig. 15: eine Gruppe von Abstellboxen in kreisförmiger und gerader Anordnung und
- Figuren 16 bis 21: schaubildliche Ansichten von Gruppen derartiger Abstellboxen mit Zusatzeinrichtungen.

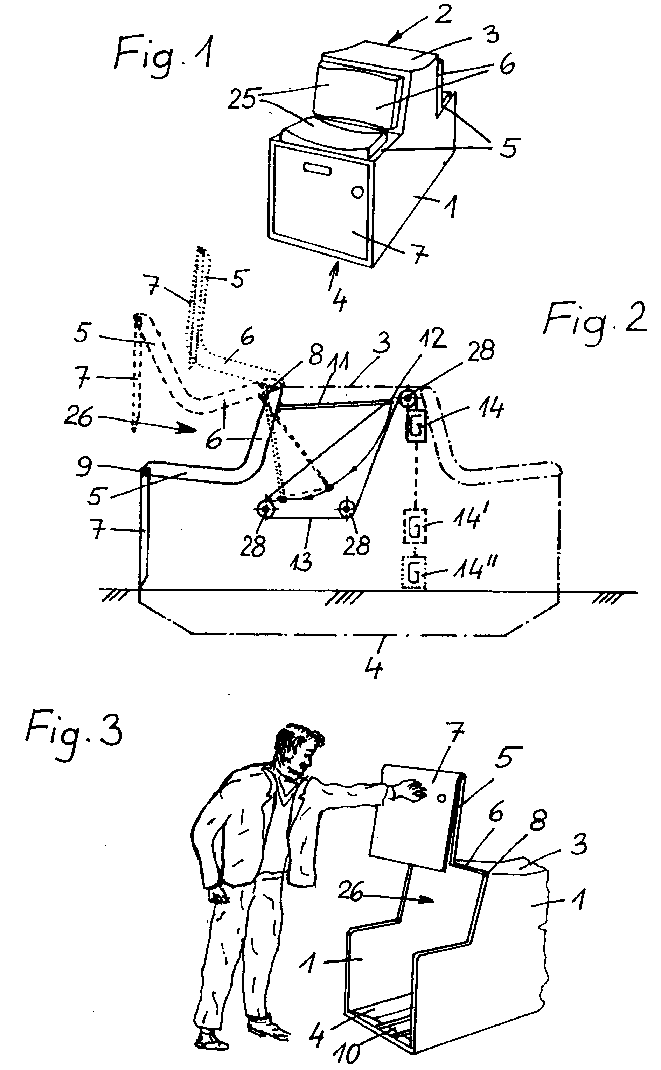

Die in Fig. 1 dargestellte kastenförmige Abstellbox besteht aus zwei parallelen Seitenwänden 1, einem erhöhten Deckenteil 3, einer Fußbodenplatte oder -wanne 4 sowie einem zu beiden Seiten angeordneten Sitz, bestehend aus einem Sitzteil 5 und einer ansteigenden Rückenlehne 6. Bei dem gezeigten Ausführungsbeispiel sind solche Sitzanordnungen zu beiden Seiten des Deckenteiles 3 vorgesehen. Die Vorderseite der Abstellbox und dementsprechend auch die Rückseite 2 sind mit einer abschließbaren Tür 7 versehen.

An dem Sitzteil 5 bzw. der Rückenlehne 6 sind Polster 25 angeordnet. Als Schloß für die Tür 7 kann entweder ein Sicherheitsschloß, ein Zeitschloß oder ein Magnetkartenschloßsystem vorgesehen sein. Weiterhin braucht eine solche Sitzanordnung nur an einer Seite vorhanden sein, wobei dann die Abstellbox an ihrer Rückseite mit einer Rückwand 2 abschließt.

In Fig. 2 ist eine Ausführungsform für die Zugänglichmachung der Öffnung 26 von der Tür 7 her dargestellt, wobei das Türteil 7 an einem Scharnier 9 an dem einstückigen Sitz angelenkt ist. Weiterhin ist die Rückenlehne 6 an einem Scharnier 8 an dem Deckenteil 3 angeordnet. Zum einfachen und ohne Kraftanwendung möglichen Öffnen ist der Sitz im Bereich der Rückenlehne 6 an einem Hebelarm 11 abgestützt. Zum einfachen und ohne Kraftanwendung möglichen Öffnen ist der Sitz im Bereich der Rückenlehne 6 an einem Hebelarm 11 abgestützt, der fest mit der Rückenlehne 6 verbunden ist. An dem anderen Ende 12 des Hebels 11 ist ein Zugseil 13 befestigt, das über Rollen 28 läuft und an dessen Ende ein Gegengewicht 14 angebracht ist. In der Schließstellung der Tür 7 ist das am Scharnier 8 wirkende Drehmoment größer als das von dem Gewicht 14 auf den Hebelarm 11. In der zweiten Position, d.h. in der strichlierten Darstellung, bei einer Position des Gegengewichtes 14', sind die Drehmomente gleich und in der dritten Position, d.h. in der punktierten Darstellung und der punktierten Lage des Gegengewichtes 14'' ist das von dem Gegengewicht 14'' auf den Hebelarm 11 wirkende Drehmoment größer als das von den Teilen 5, 6, 7 erzeugte Drehmoment, so daß dieses Teil durch das Gegengewicht 14 '' in dieser Stellung festgehalten wird.

Eine solche Anordnung kann gegebenenfalls zu beiden Seiten der Box vorgesehen sein. Gegebenenfalls kann man auch einen Springaufbeschlag verwenden. Die Fig. 3 zeigt die einfache Öffnungsmöglichkeit und bei nach oben geklapptem Sitz einschließlich dem Türteil 7 ist die Öffnung 26 in vollem Umfang zugänglich und es läßt sich z.B. ein Fahrrad 29 in eine in der Bodenplatte 4 vorhandene durchgehende Führung 10 einschieben (Fig. 4).

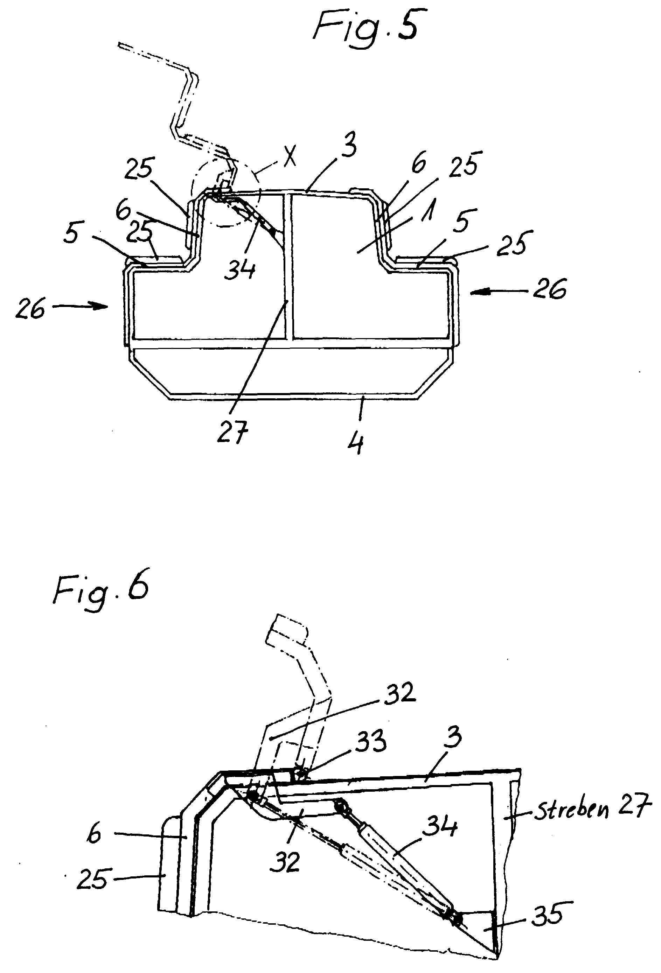

Bei der in den Figuren 5 und 6 dargestellten Ausführungsform für den Öffnungsmechanismus ist das aus der Rückenlehne 6, dem Sitzteil 5 und der starr daran angeordneten Tür 7 bestehende Bauteil an einem Scharnier 33 an dem Deckenteil 3 angeordnet. Nahe dem Scharnier 33 befindet sich an diesem Bauteil ein Hebelarm 32, an dem eine Gasfeder 34 angreift, die mit ihrem anderen Ende an einer Haltelasche 35 einer seitlich an der Abstellbox angeordneten Strebe 27 befestigt ist. Gegebenenfalls können zwei derartiger Anordnungen von Gasfedern 34 zu beiden Seiten der Abstellbox angebracht sein.

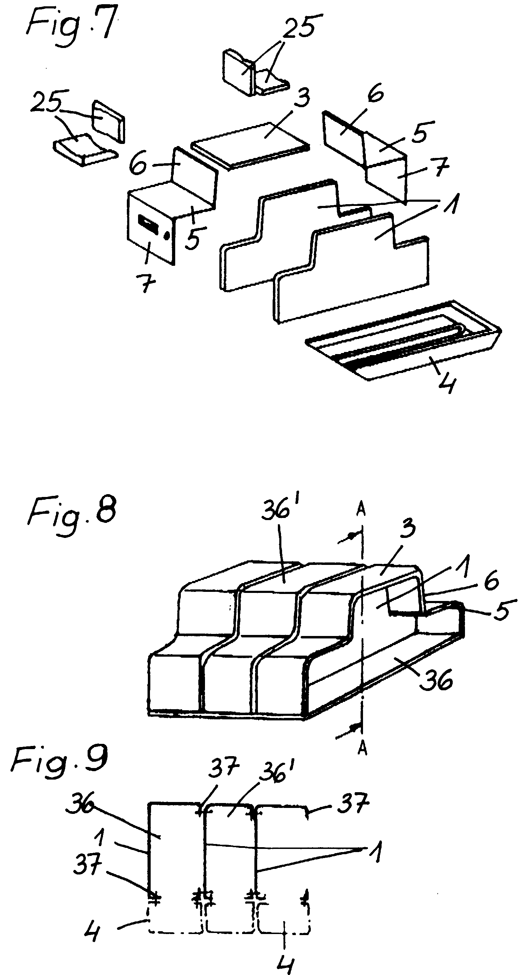

Bei der in Fig. 7 dargestellten Ausführungsform ist gezeigt, daß die Einzelteile der Abstellbox, nämlich die Seitenwände 1, das Deckenteil 3, die Bauteile 5, 6, 7 und die Fußbodenplatte oder -wanne 4 nach dem Baukastenprinzip zusammengesetzt werden können, d.h. diese Einzelteile werden miteinander verschraubt.

Bei der weiteren in den Figuren 8 und 9 gezeigten Ausführungsform besteht eine derartige Abstellbox im wesentlichen aus einer tiefgezogenen Halbschale 36, einschließend eine Seitenwandung 1, ein Deckenteil 3 sowie die zu beiden Seiten angeordneten Sitzteile 5 bzw. Rückenlehnen 6 und Türen 7 mit jeweils angeformten Flanschen 37, wobei dann diese Halbschalen 36 fortlaufend miteinander verschraubt werden, so daß die jeweils anschließende Halbschale 36' die zweite Seitenwandung 1 zur vorherigen Halbschale 36 bildet. Am Boden ist dann die jeweilige Fußbodenplatte oder -wanne 4 festgeschraubt.

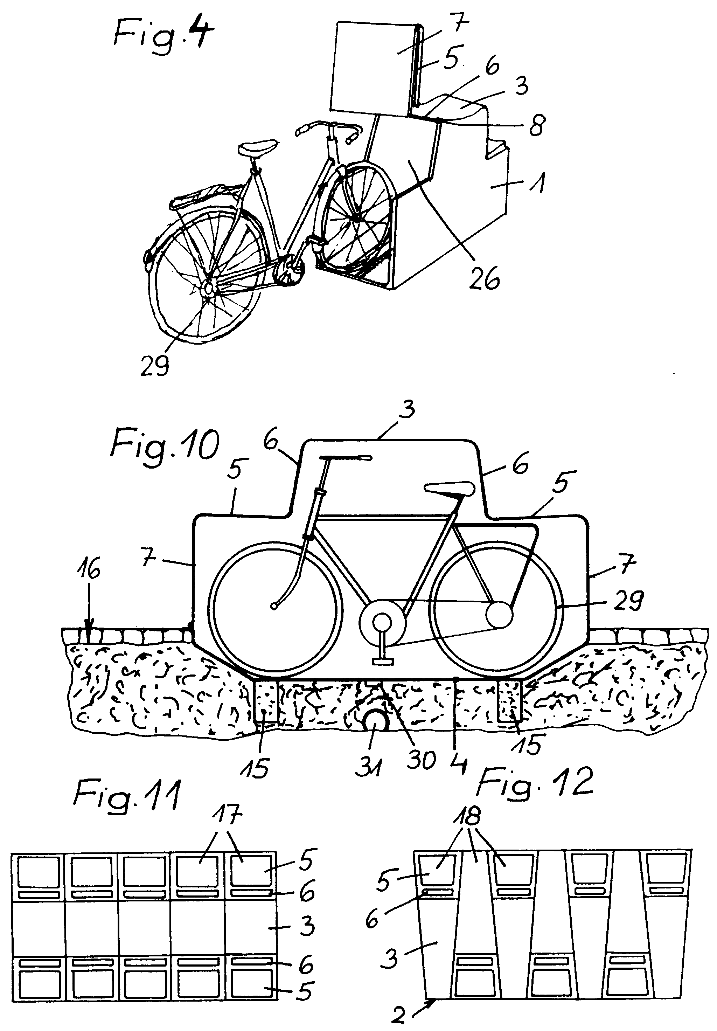

Die Fig. 10 gibt die Möglichkeit einer Montage der Abstellbox an, wobei die Fußbodenplatte 4 im Boden 16 etwas eingelassen ist und an Fundamenten 15 befestigt wird. In der Fußbodenplatte 4 befindet sich weiterhin ein Wasserablauf 30 sowie im Boden 16 ein Drainagerohr 31.

Die Abstellboxen lassen sich zu den unterschiedlichsten Gebilden in Form von Gruppen zusammensetzen. So zeigt die Fig. 11 die Aneinanderreihung von rechteckförmigen Abstellboxen 17, d.h. Abstellboxen, bei denen die Seitenwände 1 parallel verlaufen. Zu beiden Seiten befinden sich Sitzteile 5 mit Rückenlehnen 6.

Bei der weiteren Ausführungsform nach Fig. 12 verlaufen die senkrechten Seitenwände 1 von dem einseitigen Sitz 5, 6 gegen die Rückwand 2 spitz zu und bilden in der Draufsicht ein Trapez. Entsprechend aneinandergereiht sind die Sitze wechselseitig an den jeweiligen Seiten angeordnet.

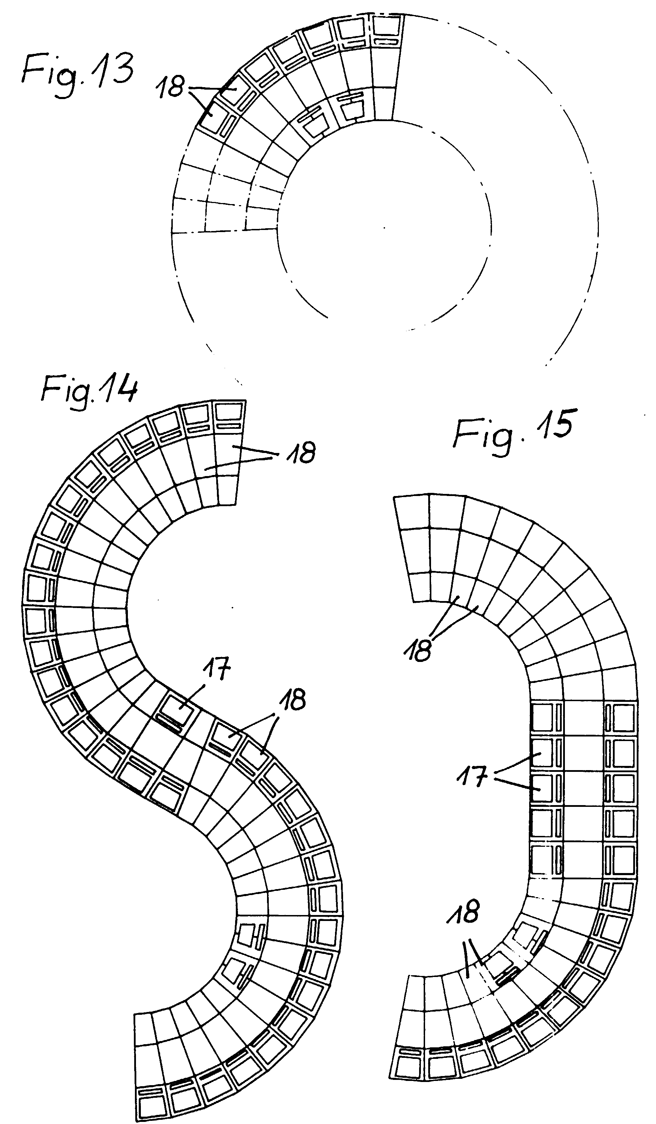

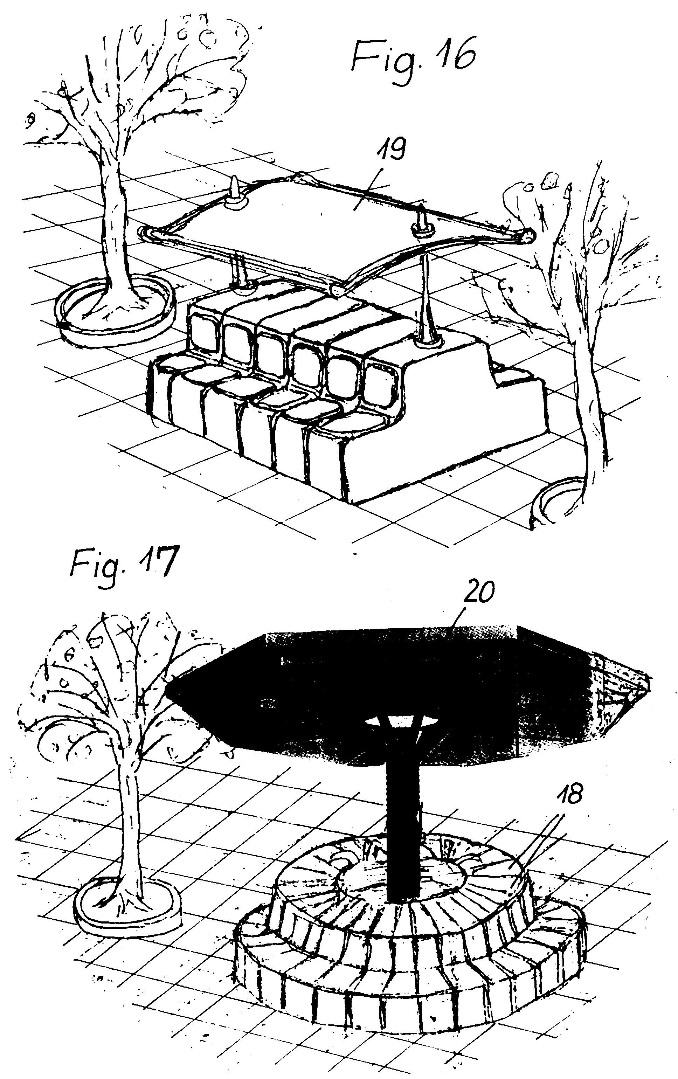

Bei der Ausführungsform nach Fig. 13 sind derartige Abstellboxen 18 zu einem kreisförmigen Gebilde zusammengesetzt. Bei Fig. 14 sind Abstellboxen 18 zu einem S-förmigen Gebilde zusammengesetzt, wobei am Übergang eine Abstellbox 17 angeordnet ist. Gemäß Fig. 15 befinden sich zwischen viertelkreisförmigen Gruppen von Abstellboxen 18 eine Anzahl von Abstellboxen 17.

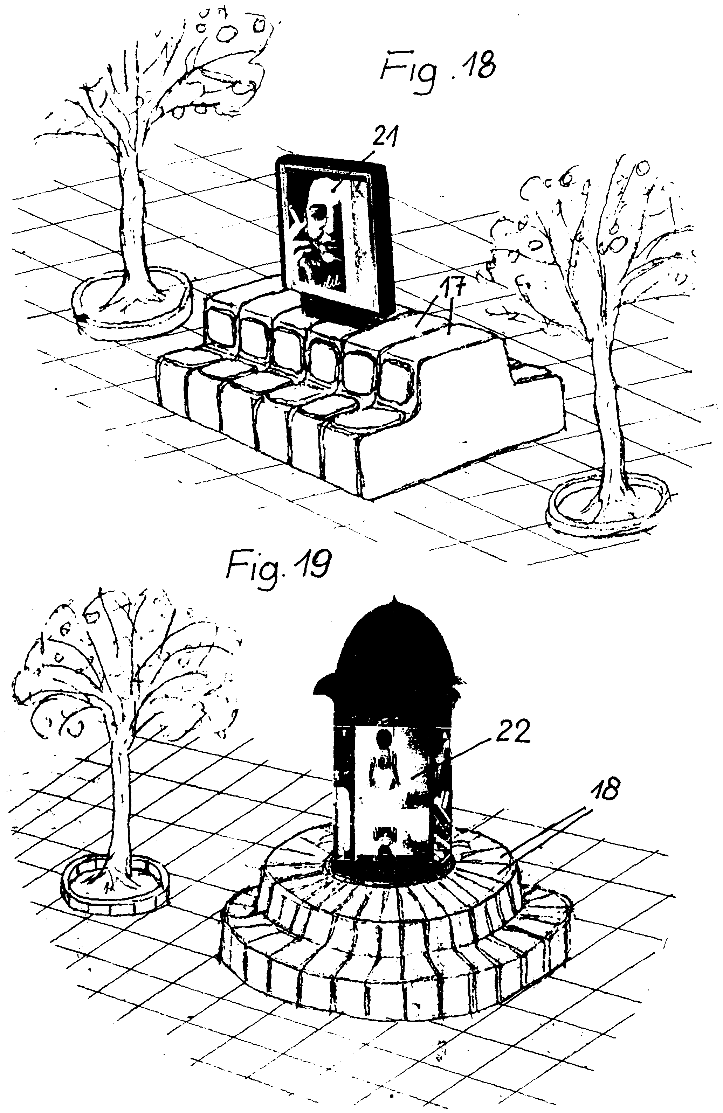

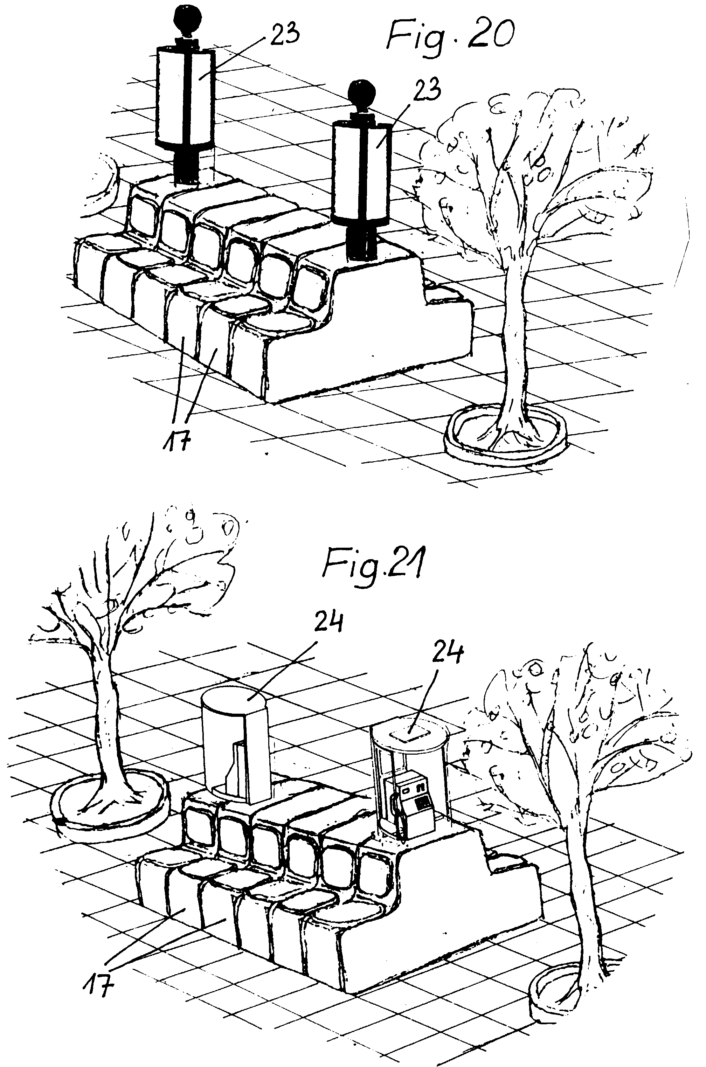

Die einzelnen Gruppen von Abstellboxen lassen sich mit zusätzlichen Elementen ergänzen. So kann beispielsweise gemäß Fig. 16 eine Überdachung 19 vorgesehen sein, die an Stützen der äußersten Boxen angebracht ist. Die Fig. 17 zeigt eine derartige Überdachung 20 bei einer kreisförmigen Gruppierung von Abstellboxen 18. Bei der Ausführungsform nach Fig. 18 ist beispielsweise auf dem Deckenteil 3 einer solchen Gruppe von Boxen 17 ein Werbeträger 21 angebracht. Dementsprechend kann bei einer kreisförmigen Anordnung von Boxen 18 mittig eine Werbesäule 22 (Fig. 19) vorgesehen sein. Weiterhin können gemäß Fig. 20 zu beiden Seiten einer solchen Gruppe Beleuchtungskörper 23 vorgesehen sein bzw. es können auch entsprechende Telefoneinheiten 24 (Fig. 21) angebracht werden.

### Bezugszeichenliste zu Anmeldung "Kastenförmige Abstellbox"

- 1: Seitenwände
- 2: Rückseite - Rückwand
- 3: Deckenteil
- 4: Fußbodenplatte oder -wanne
- 5: Sitzteil
- 6: Rückenlehne
- 7: abschließbare Tür
- 8: Scharnier
- 9: Scharnier
- 10: durchgehende Führung
- 11: Hebelarm
- 12: anderes Ende
- 13: Zugseil
- 14: Gegengewicht, 14' Position d.G., 14'' Position d.G
- 15: Fundamente
- 16: Boden
- 17: rechteckförmige Abstellbox
- 18: spitz zulaufende Abstellbox
- 19: Überdachung
- 20: Überdachung
- 21: Werbeträger
- 22: Werbesäule
- 23: Beleuchtungskörper
- 24: Telefoneinheiten
- 25: Polster
- 26: Öffnung
- 27: Streben
- 28: Rollen
- 29: Fahrrad
- 30: Wasserablauf
- 31: Drainagerohr
- 32: Hebelarm
- 33: Scharnier
- 34: Gasfeder
- 35: Haltelasche
- 36: Halbschale
- 37: Flansche

## Patentansprüche

1. Kastenförmige Abstellbox mit Seitenwänden (1), einer Rückwand (2), einem Deckenteil (3) und gegebenenfalls mit einer Fußbodenplatte (4) und mit einer die Abstellbox verschließenden Tür (7), dadurch gekennzeichnet, daß wenigstens eine Seite des Deckenteiles (3) als Sitzteil (5) und Rückenlehne (6) ausgebildet ist und das Sitzteil (5) mit der Rückenlehne (6) und dem Türteil (7) scharnierartig verbunden an einem Scharnier (8) an dem Deckenteil (3) angelenkt ist.

2. Abstellbox nach Anspruch 1, dadurch gekennzeichnet, daß die Seitenwände (1) mit der Rückwand (2) und dem Türteil (7) ein zur Rückwand (2) schmäler werdendes Trapez bilden.

3. Abstellbox nach Anspruch 1 und 2, dadurch gekennzeichnet, daß diese nach dem Baukastenprinzip aus einzelnen miteinander verschraubten Einzelteilen (1, 3, 4, 5, 6, 7) besteht.

4. Abstellbox nach Anspruch 1 bis 3, dadurch gekennzeichnet, daß diese aus aneinandergereihten Halbschalen (36) besteht, wobei die eine Seitenwandung (1) von der benachbarten Halbschale (36') gebildet wird.

5. Abstellbox nach Anspruch 1 bis 4, dadurch gekennzeichnet, daß zu beiden Seiten des Deckenteiles (3) ein Sitzteil (5) mit Rückenlehne (6) und Türteil (7) vorgesehen ist.

6. Abstellbox nach Anspruch 1 bis 5, dadurch gekennzeichnet, daß die Fußbodenplatte (4) mit einer in Längsrichtung der Box verlaufenden Führung (10) versehen ist.

7. Abstellbox nach Anspruch 1 bis 6, dadurch gekennzeichnet, daß an der aus dem Sitzteil (5) und der Rückenlehne (6) bestehenden Einheit ein Hebelarm (11) befestigt ist, an dessen Endpunkt (12) ein Zugseil (13) mit Gegengewicht (14) angreift.

8. Abstellbox nach Anspruch 7, dadurch gekennzeichnet, daß an dem Hebelarm (32) eine seitlich an der Abstellbox abgestützte Gasfeder (34) angreift.

9. Abstellbox nach einem der Ansprüche 1 bis 8, dadurch gekennzeichnet, daß das Sitzteil (5) gegen die Seitenwand (1) mittels eines Springaufbeschlages gehalten ist.

10. Abstellbox nach Anspruch 1 bis 9, dadurch gekennzeichnet, daß die Fußbodenplatte (4) an Fundamenten (15), im Boden (16) versenkt, befestigt ist.

11. Abstellbox nach Anspruch 1 bis 10, dadurch gekennzeichnet, daß einzelne Boxen (17, 18) zu Gruppen miteinander verbunden sind.

12. Abstellbox nach einem der Ansprüche 1 bis 11, dadurch gekennzeichnet, daß an den zu Gruppen zusammengesetzten Boxen (17, 18) Überdachungen (19, 20), Werbeträger (21), eine Werbesäule (22), Beleuchtungskörper (23), Telefoneinheiten (24) und dergleichen angebracht sind.

## Claims

1. A box-shaped parking enclosure having side walls (1), a rear wall (2), a lid part (3) and where appropriate having a floor plate (4) and having a door (7) which closes off the parking enclosure, characterized in that at least one side of the lid part (3) is constructed as a seat part (5) and back rest (6), and the seat part (5), together with the back rest (6) and the door part (7), is articulated, connected in the manner of a hinge, to the lid part (3) at a hinge (8).

2. A box-shaped parking enclosure according to Claim 1, characterized in that the side walls (1), together with the rear wall (2) and the door part (7), form a trapezium shape which becomes narrower towards the rear wall (2).

3. A box-shaped parking enclosure according to Claims 1 and 2, characterized in that, in accordance with the modular principle, it comprises individual single parts (1, 3, 4, 5, 6, 7) which are screwed to one another.

4. A box-shaped parking enclosure according to Claims 1 to 3, characterized in that it comprises half-shells (36) arranged next to one another in rows, the one side wall (1) being formed by the adjacent half-shell (36').

5. A box-shaped parking enclosure according to Claims 1 to 4, characterized in that a seat part (5) with a back rest (6) and a door part (7) is provided on either side of the lid part (3).

6. A box-shaped parking enclosure according to Claims 1 to 5, characterized in that the floor plate (4) is provided with a guide (10) running in the longitudinal direction of the enclosure.

7. A box-shaped parking enclosure according to Claims 1 to 6, characterized in that a lever arm (11) is secured to the unit comprising the seat part (5) and the back rest (6), and a cable pull (13) with a counter-weight (14) acts on the end point (12) of this lever arm (11).

8. A box-shaped parking enclosure according to Claim 7, characterized in that a gas spring (34) supported laterally against the parking enclosure acts on the lever arm (32).

9. A box-shaped parking enclosure according to one of Claims 1 to 8, characterized in that the seat part (5) is held against the side wall (1) by means of a spring-open fitting.

10. A box-shaped parking enclosure according to Claims 1 to 9, characterized in that the floor plate (4) is secured to foundations (15) sunk into the ground (16).

11. A box-shaped parking enclosure according to Claims 1 to 10, characterized in that individual enclosures (17, 18) are connected to one another to form groups.

12. A box-shaped parking enclosure according to one of Claims 1 to 11, characterized in that roofing elements (19, 20), advertising boards (21), an advertising column (22), lighting elements (23), telephone units (24) and the like are mounted on the enclosures (17, 18) which are joined together to form groups.

## Revendications

1. Garage en forme de boite ayant des parois latérales (1), une paroi arrière (2), une partie couverture (3) et éventuellement une plaque plancher (4), et une porte (7) le fermant, caractérisé par le fait qu'au moins un côté de la partie couverture (3) forme une assise (5) et un dossier (6), et l'assise (5), avec le dossier (6) et la porte (7), est jointe à la partie couverture (3) par une charnière (8).

2. Garage selon la revendication 1, caractérisé par le fait que les parois latérales (1) forment avec la paroi arrière (2) et la porte (7) un trapèze qui se rétrécit vers la paroi arrière (2).

3. Garage selon les revendications 1 et 2, caractérisé par le fait qu'il est constitué suivant le principe modulaire d'éléments boulonnés les uns aux autres (1, 3, 4, 5, 6, 7).

4. Garage selon les revendications 1 à 3, caractérisé par le fait qu'il est constitué de demi-coques juxtaposées (36), une des parois latérales (1) étant formée par la demi-coque voisine (36').

5. Garage selon les revendications 1 à 4, caractérisé par le fait que des deux côtés de la partie couverture (3) est prévue une assise (5) avec dossier (6) et porte (7).

6. Garage selon les revendications 1 à 5, caractérisé par le fait que la plaque plancher (4) est pourvue d'un guidage (10) qui s'étend dans la direction longitudinale du garage.

7. Garage selon les revendications 1 à 6, caractérisé par le fait qu'à l'ensemble constitué de l'assise (5) et du dossier (6) est fixé un bras de levier (11) dont l'extrémité (12) est attaquée par un câble tracteur (13) à contrepoids (14).

8. Garage selon la revendication 7, caractérisé par le fait que le bras de levier (32) est attaqué par un ressort à gaz (34) supporté latéralement par le garage.

9. Garage selon l'une des revendications 1 à 8, caractérisé par le fait que l'assise (5) est tenue contre la paroi latérale (1) par une garniture élastique.

10. Garage selon les revendications 1 à 9, caractérisé par le fait que la plaque plancher (4) est fixée à des fondations (15) enfoncée dans le sol (16).

11. Garage selon les revendications 1 à 10, caractérisé par le fait que plusieurs garages (17, 18) sont réunis en groupes.

12. Garage selon l'une des revendications 1 à 11, caractérisé par le fait que sur les garages groupés (17, 18) sont montés des toits (19, 20), des supports publicitaires (21), une colonne publicitaire (22), des luminaires (23), des postes téléphoniques (24) et des éléments semblables.
